Europäisches Patentamt

European Patent Office

Office européen des brevets

(11) Publication number: **0 348 582**
**A1**

# EUROPEAN PATENT APPLICATION

(21) Application number: 88830285.8

(51) Int. Cl.⁴: **A01K 95/00 , A01K 93/00**

(22) Date of filing: 01.07.88

(43) Date of publication of application:
03.01.90 Bulletin 90/01

(84) Designated Contracting States:
**DE FR GB IT NL**

(71) Applicant: **CENTRO MARKET PESCA SPORT DI GINO FRIGOLI & C. S.N.C.**
**Via F. Cammeo, 22**
**I-00166 Roma(IT)**

(72) Inventor: **Frigoli, Pierluigi**
**Via F. Cammeo, 22**
**I-00166 Roma(IT)**

(74) Representative: **Mascioli, Alessandro, Prof.Dr.**
**c/o A.N.D.I. Associazione Nazionale degli Inventori Via Urbana, 20**
**I-00184 Roma(IT)**

(54) **A ballast that may be screw-like inserted in floats for fishing lines.**

(57) A ballast comprising a screw-projection (1) that may be manually applied to a float (G). creating the threading in its own structure.

In the same float (G) ballasts with different weights may be inserted.

FIG.1

## A ballast that may be screw-like inserted in floats for fishing lines

The present invention concerns a ballast that may be screw-like inserted in floats for fishing lines that may be replaced according to the kind of fishing.

It is already known that the ballast is fixed to the float by means of glues or similar which determine a fix connection that may not be removed so that, in a fishing equipment, for each kind of fishing there must be a particular ballast united to the respective floats.

It is the aim of the present invention is the one of allowing the use of the same float to which different ballasts of different weights may be connected. or only a small number of different ballasts.

The aim set forth is reached by means of the ballast according to the present invention, carrying out of one piece through realization, a screw that may be inserted by hand by the fisher himself, forming its own threading in the yielding structure of the actual floats so as to be successively extracted and replaced with a further ballast of different weight into the same float.

The present invention will be described more in detail according to the attached drawings, in which a preferred embodiment is shown.

Figure 1, shows an exploded view of the ballast apart from the float.

Figure 2, shows a partial cross section of the ballast as screw-like inserted in the float.

Figure 3, shows two different ballasts of different weights that may be eventually inserted in the same float.

Relating to the details of the figures, ballast Z is provided with the screw-like projection 1, realized out of one piece through realization, that will enter, following to the screwing by the fisher himself, into the body of the float G creating the internal threading in the same realization material.

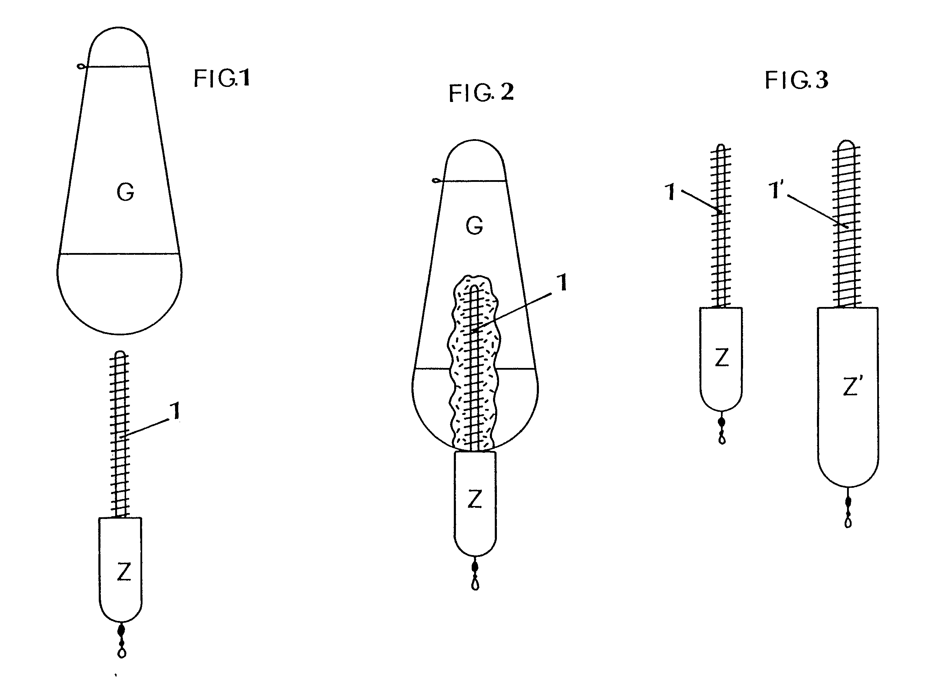

For fishing needs the ballast Z may also be successively unscrewed and replaced with a further variant, eventually of the kind Z1 shown in figure 3, provided with a screw-like projection out of one piece 1′ of different dimensions which, in turn, may realize a new internal threading in the same float G.

Said float G therefore represents the only element requested for a plurality of fishing kinds and, eventually, if provided with a heavier ballast, it may be used like a sinking element for trawling or similar.

be realized out of one piece through realization with a screw-like projection (1) so as to be applied, by hand screwing, in a float (G) and replaced with ballasts of different weights always inserted in the same float (G).

2. A ballast according to claim 1, characterized in that it is inserted in the yielding material forming the float (G), realizating its own threading following to the hand screwing.

3. A ballast according to the precedent claims, characterized in that is represents the sinking element of the float (G) for trawling and similar.

4. A ballast according to the precedent claims, characterized in different weights and in projections (1 adn 1′) out of one piece and of different dimensions that may be inserted in the same float realizing its own threading.

## Claims

1. A ballast that may be screw-like inserted into a float for fishing lines, characterized in that it may

FIG.1

G

1

Z

FIG. 2

G

1

Z

FIG. 3

1

1'

Z

Z'

EP 0 348 582 A1

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | GB-A-2175182 (DRENNAN) <br> * the whole document * | 1 | A01K95/00 <br> A01K93/00 |
| A | | 3, 4 | |
| | --- | | |
| A | US-A-3084470 (HEATER) | | |
| | --- | | |
| A | GB-A-1519487 (ELLIS) | | |
| | --- | | |
| A | US-A-3757453 (THERRES) | | |
| | --- | | |
| A | GB-A-2166631 (DRENNAN) | | |
| | ----- | | |

TECHNICAL FIELDS
SEARCHED (Int. Cl.4 )

A01K

The present search report has been drawn up for all claims

| Place of search | Date of completion of the search | Examiner |
|---|---|---|
| THE HAGUE | 03 FEBRUARY 1989 | VERDOODT S.J.M. |